Europäisches Patentamt

European Patent Office

Office européen des brevets

(19)

(11) **EP 0 724 068 B1**

(12) **EUROPÄISCHE PATENTSCHRIFT**

(45) Veröffentlichungstag und Bekanntmachung des Hinweises auf die Patenterteilung:
**26.05.1999 Patentblatt 1999/21**

(51) Int Cl.⁶: **F01M 1/12**

(21) Anmeldenummer: **95120099.7**

(22) Anmeldetag: **19.12.1995**

(54) **Ölversorgungssystem**

Oilfeeder system

Système d'amenée d'huile

(84) Benannte Vertragsstaaten:
**DE FR GB IT**

(30) Priorität: **25.01.1995 DE 19502235**

(43) Veröffentlichungstag der Anmeldung:
**31.07.1996 Patentblatt 1996/31**

(73) Patentinhaber: **DaimlerChrysler AG**
**70567 Stuttgart (DE)**

(72) Erfinder: **Stich, Bodo Dr.Dipl.-Ing**
**D-65191 Wiesbaden (DE)**

(74) Vertreter: **Weber, Dieter, Dr. et al**
**Weber, Dieter, Dr.,**
**Seiffert, Klaus, Dipl.-Phys.,**
**Lieke, Winfried, Dr.,**
**Gustav-Freytag-Strasse 25**
**65189 Wiesbaden (DE)**

(56) Entgegenhaltungen:
FR-A- 873 580           US-A- 1 799 271
US-A- 2 550 967         US-A- 5 199 528

- PATENT ABSTRACTS OF JAPAN vol. 15, no. 194 (M-1114), 20.Mai 1991 & JP-A-03 050314 (YAMAHA), 4.März 1991,

**Beschreibung**

Die vorliegende Erfindung betrifft ein Ölversorgungssystem mit mindestens einer druckabhängig regelbaren Pumpe und einer Ölwanne oder dergleichen, aus welcher die Pumpe Öl ansaugt und mit geregeltem Druck an ein mit Öl zu versorgendes System abgibt.

Ein solches Ölversorgungssystem ist aus der DE-C-33 33 647 bekannt.

Derartige Ölversorgungssysteme werden zum Beispiel als Schmiermittelpumpen in Kraftfahrzeugmotoren verwendet. Regelbare Pumpen in Ölversorgungssystemen sind generell überall dort gefragt, wo der Ölbedarf oder sonstiger Schmiermittelbedarf in Abhängigkeit von unterschiedlichen Betriebsbedingungen des Systems variieren, wie dies zum Beispiel für Kraftfahrzeugmotoren gilt. In kaltem Zustand ist das Öl zähflüssig und der Ölbedarf zumindest im niedertourigen Bereich gering. Mit wachsender Temperatur und steigenden Drehzahlen wächst auch der Ölbedarf des Motors, so daß die Pumpe entsprechend mehr Öl fördern muß. Im allgemeinen werden derartige Pumpen druckabhängig geregelt, das heißt vom Pumpenausgang wird ein Regeldruck abgeleitet und auf eine Verstelleinrichtung gegeben, die das Fördervolumen der Pumpe mit zunehmenden Druck senkt oder mit abnehmenden Druck steigert, so daß sich letztlich am Pumpenausgang ein im wesentlich konstanter Ausgangsdruck einstellt, der so durch Parameter des Regelsystems gewählt wird, daß das System unter allen Betriebsbedingungen ausreichend mit Öl bzw. Schmiermittel versorgt wird. Es versteht sich, daß z. B. im Falle eines Kraftfahrzeugmotors bei geringen Drehzahlen im kalten Zustand nur ein geringes Ölvolumen durch die Pumpe gefördert werden muß, um einen vorgegebenen Minimaldruck aufrecht zu erhalten, während das Fördervolumen beträchtlich größer sein muß, wenn der Motor bei hohen Drehzahlen und hohen Temperaturen ausreichend mit Öl versorgt werden soll. Die regelbare Pumpe muß deshalb entsprechend groß und robust ausgelegt werden, um einen solchen weiten Förderbereich abzudecken. Dabei trägt die verlustfreie Regelbarkeit des Förderstroms der Pumpe zu erheblichen Energieeinsparungen und zur Verbesserung des Systemwirkungsgrades bei.

Bei Fahrzeugmotoren stellt sich ferner noch die folgende Problematik, daß nämlich kleine Motoren (1000 cm$^3$ Hubraum) einen wesentlich geringeren maximalen Ölbedarf aufweisen als großvolumige Motoren und üblicherweise auch der verfügbare Einbauraum für die Ölpumpe sehr unterschiedlich ist. Dies bedeutet, daß in der Regel - z.B. zur Abdeckung der gesamten Pkw-Motorenpalette - mehrere, zumindest aber zwei unterschiedliche Pumpenbaugrößen eingesetzt werden müssen. Dies erhöht die Teilevielfalt, reduziert die Losgrößen und hat damit einen deutlich negativen Effekt auf die Kosten, insbesondere bei den an sich im Vergleich zu Konstantpumpen komplexen und kostenaufwendigeren Regelpumpen.

Gegenüber diesem Stand der Technik liegt der vorliegenden Erfindung die Aufgabe zugrunde, ein Ölversorgungssystem mit den eingangs genannten Merkmalen zu schaffen, welches in der Lage ist, mit einer einzigen Baugröße einer verlustfrei regelbaren Pumpe, die abgestimmt ist auf kleine bis mittlere Motorengrößen, auch großvolumige Motoren sicher und wirkungsgradoptimiert zu versorgen und ferner auch in der Lage ist, Hochleistungsmotoren bei Ölpegelverlagerung permanent mit Öl zu versorgen, und "Trockenlauf" zu vermeiden.

Diese Aufgabe wird dadurch gelöst, daß insbesondere bei größeren Motoren neben der regelbaren Pumpe eine Konstantpumpe vorgesehen ist, wobei die regelbare Pumpe so ausgestaltet ist, daß sie bei ein und derselben Drehrichtung ihrer Antriebswelle wahlweise in der normalen Pumprichung oder in Gegenrichtung das Pumpmedium befördert, bzw. passieren läßt, und wobei der Ausgang der Konstantpumpe mit dem Ausgang der regelbaren Pumpe und dem mit Öl zu versorgenden System verbunden ist.

Die Aufteilung einer großen in zwei entsprechend kleinere Pumpen, von denen allerdings nur eine regelbar und die andere eine Konstantpumpe ist, erlaubt in vorteilhafter Weise eine größere Flexibilität in der Anpassung an vorhandenen Raum und eine kostengünstige Großserienfertigung weniger Baugrößen, möglichst nur einer Baugröße, der komplexen Regelpumpe. Zwar sind im Prinzip im Stand der Technik bereits mehrstufige Pumpen bekannt, bei welchen je nach Bedarf einer ersten Pumpe oder einer ersten Pumpenkammer weitere Pumpen oder Pumpenkammern zugeschaltet werden, jedoch ermöglichen diese keine vergleichbar gleichmäßige Regelung und Einstellung eines festen Ausgangsdruckes und haben häufig auch einen höheren Energieverbrauch als es der an sich erforderlichen hydraulischen Leistung entspricht. Durch die erfindungsgemäße Kopplung einer Konstantpumpe mit einer Regelpumpe mit dem Merkmal, daß die regelbare Pumpe bei Bedarf auch entgegen ihrer normalen Pumprichtung befördert bzw. zumindest hindurchläßt, gelingt es, den gesamten Regelbereich zwischen einer Fördermenge Null und der maximalen Fördermenge, definiert als Summe der maximalen Fördermenge beider Pumpen, verlustfrei abzudecken, wobei, ebenso wie bei einer einzigen passend ausgestalteten Regelpumpe, stets nur die hydraulische Leistung aufgebracht wird, die vom Verbrauchersystem benötigt wird, im Gegensatz zu Systemen, welche beispielsweise überschüssig gefördertes Öl oder sonstiges Schmiermittel durch Überdruckventile abführen, was mit Leistungsverlusten verbunden ist.

Der Grund für dieses günstige Verhalten des erfindungsgemäßen, kombinierten Systems ist der folgende.

Vom Ausgang der Konstantpumpe besteht eine direkte Verbindung zum zu versorgenden System und auch zum Ausgang der geregelten Pumpe, und von diesem Ausgang wird wiederum der Regeldruck abgeleitet. Unter der Annahme, daß z. B. nur ein geringer Schmiermittelbedarf besteht, beide Pumpen jedoch gleichmäßig angetrieben werden, wobei allein der von der Konstantpumpe geförderte Volumenstrom schon den Bedarf übersteigt, so ist bei diesen Bedingungen der Druck am Ausgang der regelbaren Pumpe höher als der durch die Parameter der regelbaren Pumpe wählbare, normale Förderdruck. Daher wird die Regelpumpe zwangsweise durch diesen höheren Druck derart verstellt, daß sich in der regelbaren Pumpe die Fließrichtung umkehrt, mit anderen Worten, durch den höheren Druck, den die Konstantpumpe erzeugt, wird ein Teil des von dieser geförderten Öles abgezweigt und durch die regelbare Pumpe gedrückt, die damit als Motor arbeitet und an das System Antriebsenergie zurückliefert anstatt Antriebsenergie aufzunehmen. Die von der Konstantpumpe erzeugte, überschüssige hydraulische Leistung wird also von der regelbaren Pumpe zurückgewonnen, wobei der vom System nicht benötigte Teilstrom des Öls durch die regelbare Pumpe zurück in einen Sumpf bzw. die Ölwanne geleitet wird. Je geringer der Bedarf des Systems ist, um so größer ist der Anteil des durch die regelbare Pumpe zurückgeförderten Öles, wobei diese auch eine entsprechend hohe Antriebsleistung an das System abgibt. Im Prinzip kann sich das System daher einem beliebig kleinen Bedarf des mit Öl zu versorgenden Systems anpassen.

Wenn allerdings die von der Konstantpumpe geförderte Ölmenge für die Versorgung des Systems nicht ausreicht, so sinkt am Ausgang der Pumpen der Druck entsprechend ab, wodurch das Fördervolumen der regelbaren Pumpe gesteigert wird, da von diesem Ausgang der Regeldruck abgeleitet wird. Im Ergebnis wird durch die zusätzliche Förderung der regelbaren Pumpe ein bestimmter konstanter Druck an deren Ausgang eingestellt, so daß im Extremfall beide Pumpen mit maximaler Förderleistung arbeiten, wenn das System einen entsprechend hohen Bedarf hat.

Weiterhin ist es zur Ausnutzung und Rückgewinnung der Antriebsenergie für die Konstantpumpe, wenn diese über Bedarf fördert, zweckmäßig, wenn Konstantpumpe und regelbare Pumpe eine gemeinsame Antriebswelle bzw. in fester Antriebsbeziehung gekoppelte Antriebswellen aufweisen.

Für bestimmte Anwendungen ist es außerdem zweckmäßig, wenn in die Ausgangsleitung der Konstantpumpe noch ein Rückschlagventil integriert ist und davor eine Zweigleitung abgeht, die mit der Ölwanne oder einem Ölsumpf oder dergleichen verbunden ist, wobei in dieser Zweigleitung ein zweites Ventil vorgesehen ist, welches auf einen Massenstrom reagiert oder als "Schwimmerventil" ausgebildet ist und vom Ölpegel in der Ölwanne gesteuert wird. Diese Variante ist vor allem dann von Bedeutung, wenn die Möglichkeit besteht, daß die Konstantpumpe gelegentlich Luft ansaugt. Wenn die Konstantpumpe Luft ansaugt, bedeutet dies, daß im Saugbereich der Pumpe kein Ölvolumen vorhanden ist und damit kein Massenstrom gefördert wird. In diesem Betriebszustand ist das in der Zweigleitung integrierte Ventil (massenstrom- oder schwimmergesteuert) geöffnet, so daß die geförderte Luft direkt drucklos wieder in Richtung Ölwanne bzw. Sumpf abgeführt wird. Diese Situation kann z. B. auftreten bei Kraftfahrzeugmotoren in Hochleistungsfahrzeugen, die sehr schnell beschleunigen oder bremsen oder sehr schnelle Kurvenfahrten durchführen. Dabei kann sich das Öl am Boden einer Ölwanne so stark nach vorn oder hinten oder seitlich verschieben, daß eine der Pumpen Luft ansaugt. Zur Beherrschung einer solchen Situation ist im übrigen vorgesehen, daß die beiden Pumpen voneinander beabstandete Saugstutzen aufweisen, vorzugsweise münden die Saugstutzen in diametral gegenüberliegenden Bereichen einer Ölwanne, deren Boden im übrigen auch so ausgestaltet werden kann, daß in beliebigen Beschleunigungssituation auf jeden Fall in einem der Bereiche, wo die Saugstutzen münden, Öl vorhanden ist.

Vorzugsweise haben die beiden Pumpen ein gleiches maximales Fördervolumen, wobei es sich versteht, daß bei der Konstantpumpe das maximale Fördervolumen das Konstantvolumen ist, welches die Verdrängerelemente der Pumpe bei einem Umlauf verdrängen bzw. fördern, während die regelbare Pumpe ein beliebiges Volumen zwischen Null und ihrem maximalen Fördervolumen zu dem Verbrauchersystem fördern kann und in der erfindungsgemäßen Ausgestaltung sogar in Gegenrichtung laufen kann, wobei sie dann allerdings nicht als Pumpe, sondern als hydraulischer Motor läuft, der von überschüssig gefördertem Öl der Konstantpumpe angetrieben wird.

Weiterhin ist eine Ausgestaltung des Versorgungssystemes bevorzugt, bei welcher mindestens die regelbare Pumpe eine Flügelzellenpumpe ist, wobei vorzugsweise auch die Konstantpumpe als Flügelzellenpumpe ausgestaltet ist. Gerade bei Flügelzellenpumpen ist die Umkehr der Strömungsrichtung des Pumpmediums durch die Pumpe bei gleicher Drehrichtung einer Pumpenantriebswelle problemlos zu verwirklichen, indem man zuläßt, daß eine Exzentrizität des Stellringes der Pumpe relativ zu ihrem Rotor nicht nur zwischen der zentrierten Stellung und zu einer Seite hin möglich ist, sondern darüberhinaus auch zur gegenüberliegenden Seite hin.

Weitere Vorteile, Merkmale und Anwendungsmöglichkeiten der vorliegenden Erfindung werden deutlich anhand der folgenden Beschreibung und der dazugehörigen Figuren. Es zeigen:

Figur 1      ein Fließschema einer bevorzugten Ausführungsform des erfindungsgemäßen Ölversorgungssystems,

Figur 2      ein Diagramm der Leistungsaufnahme des Ölversorgungssystems in einem ersten Betriebszustand und

Figur 3      ein Diagramm der Leistungsaufnahme des Ölversorgungssystems in einem zweiten Betriebszustand.

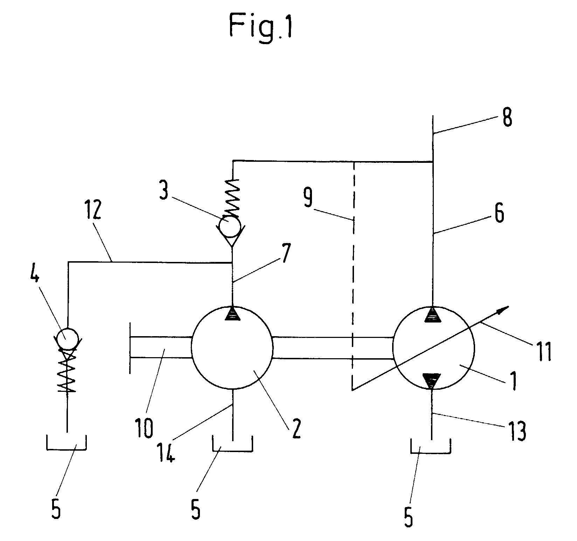

In Figur 1 sind die einzelnen Elemente des Ölversorgungssystems lediglich schematisch wiedergegeben. Man erkennt rechts in der Mitte eine regelbare Pumpe 1, die mit einer in der Mitte dargestellten Konstantpumpe 2 eine gemeinsame Antriebswelle 10 aufweist. Das heißt, die beiden Pumpen 1, 2 werden jeweils mit der gleichen Drehzahl angetrieben. Vorzugsweise sind beide Pumpen als Flügelzellenpumpen ausgebildet und z. B. für das Schmiermittelversorgungssystem eines Kraftfahrzeugmotors ausgelegt.

Während bei einer gegebenen Drehzahl die Konstantpumpe 2 auch konstante Mengen an Schmiermittel befördert, hängt die Fördermenge bei der regelbaren Pumpe 1 von dem an ihrem Ausgang 6 bzw. im zu versorgenden System 8 herrschenden Druck ab. Dieser Druck wird über eine Regelleitung 9 auf entsprechenden Stellglieder des Regelsystems der Pumpe 1 gegeben, welches im Falle einer Flügelzellenpumpe z. B. so ausgebildet sein kann, daß ein Kolben gegen den Gegendruck einer Feder einen den Pumpraum definierenden Stellring relativ zu einem darin umlaufenden Rotor in Richtung kleinerer oder größerer Exzentrizität verschiebt. Hierzu kann beispielsweise auf die deutschen Patente Nr. 33 33 647 und 40 11 671 derselben Anmelderin verwiesen werden, die den technologischen Hintergrund der vorliegenden Anmeldung definieren.

Beide Pumpen haben je einen Ansaugstutzen 13 bzw. 14, wobei die beiden Ansaugstutzen 13, 14 vorzugsweise im Abstand voneinander und besonders bevorzugt in diametral gegenüberliegenden Bereichen einer gemeinsamen Ölwanne 5 münden, wobei in der Figur 1 die Ölwanne 5 mehrfach separat als Symbol dargestellt ist, jedoch jeweils ein und dieselbe Ölwanne und allenfalls verschiedene Positionen in derselben bezeichnet.

Am Ausgang 7 der Konstantpumpe 2 ist eine Verzweigung vorgesehen. Einer der Zweige läuft über ein Rückschlagventil 3 zu dem mit Öl zu versorgenden System 8. Der andere Zweig läuft über ein weiteres Ventil 4 zurück zur Ölwanne 5. Dabei ist das Rückschlagventil 3, welches in der Pumprichtung der Konstantpumpe 2 öffnet, in Schließrichtung durch eine Feder leicht vorgespannt, während umgekehrt das Ventil 4, welches zur Ölwanne zurückführt, so angeordnet ist, daß es in der normalen Pumprichtung der Konstantpumpe 2 schließt, wobei es allerdings in Öffnungsrichtung entweder durch eine Feder vorgespannt ist oder über einen ölpegelgesteuerten Schwimmer betätigt wird. Im Ergebnis führt dies dazu, daß dann, wenn kein Ölstrom (Massenstrom) am Ausgang der Pumpe 7 erzeugt wird, das Rückschlagventil 3 geschlossen bleibt und das Medium über die Zweigleitung 12 und das Ventil 4, welches entweder als massenstrom- oder ölpegel-/schwimmergesteuertes Ventil ausgebildet ist, in die Ölwanne 5 zurückgepumpt wird. Dies ist typischerweise dann der Fall, wenn die Pumpe 2 Luft ansaugt. Mit anderen Worten, sobald die Pumpe 2 Luft ansaugt, schließt das Rückschlagventil 3 unter der Vorspannung seiner Feder, während das Ventil 4 öffnet oder geöffnet bleibt, so daß die Luft in die Ölwanne zurückbefördert wird. Saugt die Pumpe 2 dagegen Öl an, so entsteht rasch ein Massenstrom, der das Ventil 4 schließt und das erste Rückschlagventil 3 öffnet, so daß dann das System 8 mit Öl versorgt wird. Bei Vernachlässigung eines etwaigen Druckverlustes im Rückschlagventil 3 kann man sagen, daß der Ausgangsdruck der Pumpe 2 über die Regelleitung 9 gleichzeitig auch das Regelsystem der regelbaren Pumpe 1 beaufschlagt. Auch der Ausgang 6 der regelbaren Pumpe 1 hat im wesentlichen denselben Druck. Der Einfluß, den diese Art der hydraulischen Verschaltung auf die Arbeitsweise der regelbaren Pumpe 1 hat, wird am besten anhand verschiedener Situationen erläutert. Falls das mit Öl zu versorgende System einen relativ hohen Bedarf hat, der von der Konstantpumpe 2 allein nicht gedeckt werden kann, so ist der Druck am Ausgang 7 der Konstantpumpe und auch in Regelleitung 9 der regelbaren Pumpe 1 entsprechend gering. Dies bedeutet, daß das Regelsystem 11 die regelbare Pumpe 1 in Richtung ihres maximalen Fördervolumens einstellt, so daß beide Pumpen 1 und 2 gemeinsam den Bedarf des mit Öl zu versorgenden Systems 8 decken, was im Ergebnis zu einem höheren Druck am Ausgang beider Pumpen und auch in der Regelleitung 9 führt, wobei die Regelcharakteristik einer regelbaren Pumpe typischerweise derart ausgestaltet ist, daß sich in allen Betriebszuständen ein im wesentlichen konstanter Druck an den Ausgängen 6, 7 und in der Regelleitung 9 sowie im zu versorgenden System 8 einstellt.

Falls andererseits der Bedarf des mit Öl zu versorgenden Systems 8 geringer ist als es der Förderleistung der Konstantpumpe 2 entspricht, so muß unweigerlich der Druck an ihrem Ausgang 7 und damit auch in der Regelleitung 9 und am Ausgang 6 der regelbaren Pumpe ansteigen. Dabei kann das Regelsystem 11 die Pumpe 1 nicht nur soweit drosseln, daß ihr Fördervolumen auf Null absinkt, sondern sogar soweit, daß das Öl in der entgegengesetzten Richtung fließt. Im Falle einer Flügelzellenpumpe ist dies sehr leicht einzusehen, wenn sich die Exzentrizität des Stellringes der Flügel zu der Pumpe relativ zu dem zentralen Rotor von der einen auf die andere Seite verschiebt.

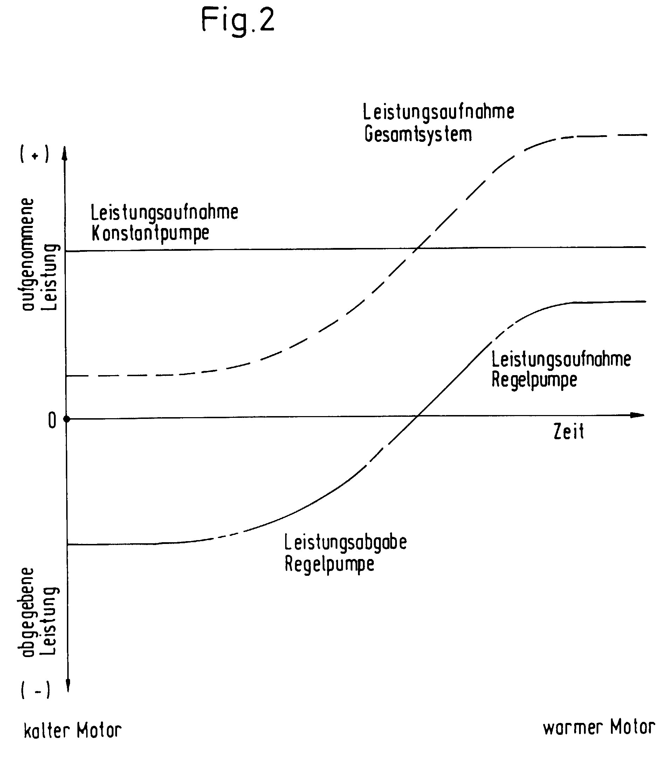

In diesem Fall wird also das von der Konstantpumpe 2 geförderte, überschüssige Öl durch die regelbare Pumpe 1 in Gegenrichtung hindurchgedrückt, so daß der Rotor dieser Pumpe durch das hindurchgedrückte Öl, das eine hydraulische Energie bzw. Leistung darstellt, angetrieben wird und damit diese Antriebskraft über die Welle 10 zurück auf die Konstantpumpe 2 übertragen wird. Damit wird dem gemeinsamen Antriebssystem für die Welle 10 beider Pumpen 1 und 2 entsprechend weniger Energie entnommen. Obwohl also die Konstantpumpe bei einer gegebenen Drehzahl ein konstantes Fördervolumen hat, welches größer sein mag als der aktuelle Bedarf des mit Öl zu versorgenden Systems, erhält aufgrund dieser Zusammenschaltung das mit Öl zu versorgende System dennoch nur die Menge an Öl, die es tatsächlich benötigt, während überschüssiges Öl über die regelbare Pumpe 1 zurückgeführt wird, die in diesem Falle als Motor arbeitet und damit auch die Antriebsenergie reduziert, die für den Antrieb der Konstantpumpe 1 erforderlich ist, so daß diese im wesentlichen auch nur die Antriebsenergie benötigt, die für die Förderung des Ölanteils in das mit Öl zu versorgende System erforderlich ist. Diese Funktionsweise des erfindungsgemäßen Systems wird in Figur 2 veranschaulicht.

In Figur 2 ist in vertikaler Richtung die Leistung der Konstantpumpe und der Regelpumpe aufgetragen, wobei die Leistungsaufnahme der Konstantpumpe mit einer durchgezogenen Linie und die Leistungsaufnahme bzw. -abgabe der regelbaren Pumpe mit einer gestrichelten Linie wiedergegeben ist. Strichpunktiert ist die Leistungsaufnahme des Gesamtsystems dargestellt. In horizontaler Richtung ist in Figur 2 die Zeit aufgetragen. Figur 2 zeigt beispielhaft die Leistungsaufnahmen während des Warmlaufens eines Verbrennungsmotors.

Zu Beginn des betrachteten Zeitabschnittes hat das zu versorgende System zunächst einen konstanten, sehr geringen Ölbedarf, der anschließend steigt und dann bei konstanter Betriebsweise des Motors ebenfalls konstant bleibt. Dies entspricht genau der Leistungsaufnahme des Gesamtsystems entsprechend der strichpunktierten Linie. Im einzelnen erfolgt die Ölversorgung parallel von den beiden Pumpen, die allerdings aus dem äußeren System in unterschiedlichem Maße Energie aufnehmen, wobei im Falle der Figur 2 auch lediglich die gesamte Leistungsaufnahme der einzelnen Pumpen wiedergegeben ist, ohne Rücksicht darauf, von wo die entsprechende Antriebsleistung bereitgestellt wird. Außerdem ist zur Vereinfachung und Veranschaulichung hier angenommen, daß die Pumpen mit konstanter Drehzahl laufen und eine Bedarfsanpassung lediglich durch entsprechende Anpassung der regelbaren Pumpe erfolgt.

Dementsprechend nimmt die Konstantpumpe während des gesamten betrachteten Zeitabschnittes eine konstante Leistung auf. Die Leistungsaufnahme der Regelpumpe variiert dagegen mit dem Ölbedarf und damit auch dem Leistungsbedarf des Gesamtsystems. Zu Beginn des betrachteten Zeitabschnittes erfordert der Betrieb des Motors eine deutlich geringere hydraulische Leistung als sie von der Konstantpumpe zur Verfügung gestellt wird. Damit geht die Regelpumpe sofort in den Motorbetrieb und setzt die überschüssige hydraulische Leistung in mechanische Leistung um und führt diese über die gemeinsame Antriebswelle zurück auf die Konstantpumpe, was zu einer entsprechenden Reduzierung der aufgenommenen Leistung des Gesamtsystems führt. Steigt nun z.B. mit wärmer werdendem Motor der Ölbedarf, reicht irgendwann das Fördervolumen der Konstantpumpe zur Aufrechterhaltung des am Regler vorgegebenen Druckes nicht mehr aus und die Regelpumpe geht vo Motor- in den Pumpenbetrieb über.

Allgemein gilt die folgende Leistungsbilanz: Aufgenommene Leistung des Gesamtsystems ist gleich der Summe der Leistungen von Konstantpumpe und Regelpumpe

$$P_G = P_K + P_R$$

wobei das Vorzeichen der Regelpumpenleistung, je nach Betriebsart, positiv oder negativ sein kann.

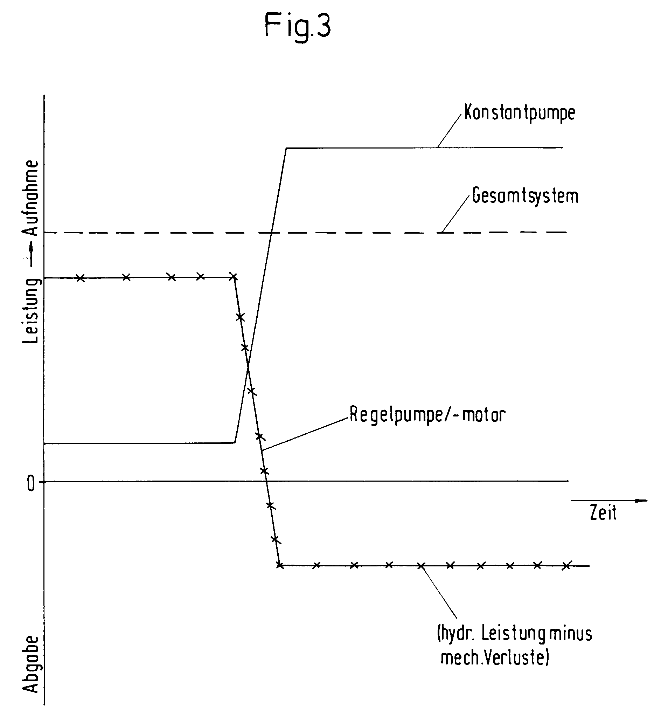

Figur 3 zeigt noch eine andere Betriebsweise des Ölversorgungssystems, wie sie z. B. in einem Hochleistungsmotor auftreten kann, in welchem jede der beiden Pumpen 1, 2 für sich ausreichend Öl für den Betrieb des Motors fördert, wobei jedoch in Abhängigkeit von äußeren Kräften, z. B. beim Beschleunigen, Abbremsen oder Kurvenfahren, der Ansaugstutzen einer der beiden Pumpen nicht in Öl eintaucht. In Figur 3 ist eine solche Situation als Funktion der Zeit dargestellt, wobei am Anfang des betrachteten Zeitraums angenommen ist, daß die Ölversorgung im wesentlichen durch die regelbare Pumpe erfolgt, während der Ansaugstutzen der Konstantpumpe 2 im wesentlichen nur Ölnebel ansaugt und allenfalls geringe Mengen von Öl erfaßt. Demzufolge wird die Ölversorgung im wesentlichen von der regelbaren Pumpe 1 übernommen, die über ihr Regelsystem 11 einen bestimmten Öldruck im Motor bzw. an den Verbrauchsstellen aufrechterhält. Bei konstanten äußeren Bedingungen ist dabei auch die Leistungsaufnahme der regelbaren Pumpe 1 im wesentlichen konstant, wie durch die mit Kreuzen gekennzeichnete, horizontale Linie am Anfang verdeutlicht wird. Die Konstantpumpe 2, welche, wie bereits erwähnt, im wesentlichen nur Ölnebel ansaugt, nimmt relativ wenig Leistung auf, wie durch die untere, durchgezogene horizontale Linie angedeutet wird. Bei diesem Betriebszustand bleibt das in Schließrichtung vorgespannte Ventil 3 geschlossen, während das massenstrom- oder schwimmergesteuerte Ventil 4 offen bleibt, so daß der Ausgang der Konstantpumpe 2 drucklos entlüftet wird.

Sobald nun aufgrund einer schnellen Kurvenfahrt oder Beschleunigung der Ansaugstutzen der Konstantpumpe in das sich in einer Ölwanne verlagernde Öl eintaucht, steigt die Leistungsaufnahme der Konstantpumpe binnen kurzer Zeit auf ihren bei der gegebenen Drehzahl konstanten und gleichzeitig maximalen Wert an. Sobald Öl am Ausgang 7 der Konstantpumpe 2 mit ansteht, schließt das Ventil 4 und das Ventil 3 öffnet, wobei nunmehr auch der Regeleingang 9 der regelbaren Pumpe 1 mit dem Ausgangsdruck der Konstantpumpe beaufschlagt wird. Da im vorliegenden Fall angenommen wurde, daß jede der Pumpen für sich ausreichend und mit einem gewissen Sicherheitsspielraum dimensioniert wurde, um das gesamte System mit Öl zu versorgen, liegt die tatsächliche Leistung der Konstantpumpe 2 im allgemeinen über dem aktuellen Bedarf, was unter anderem dazu führt, daß ein Teil des Öles, aufgrund des herrschenden Druckes und einer entsprechenden Verstellung des Regelsystems 11, über den Ausgang 6 und den Eingang 13 der Regelpumpe 1 in den Pumpensumpf 5 zurückgeführt wird, mit anderen Worten, die Verstellung der regelbaren Pumpe erfolgt, ausgehend von der anfänglichen Pumpeneinstellung zunächst auf Nullförderung und über die Nullförderung hinaus, so daß die regelbare Pumpe 1 nunmehr nicht als Pumpe, sondern als hydraulischer Motor arbeitet. Da die Antriebswelle der Regelpumpe 1 mit der Antriebswelle der Konstantpumpe 2 gekoppelt ist, erhält die Konstantpumpe auf diese Weise einen Teil der von ihr insgesamt aufgenommenen, und in Form des hineingepumten Öles in das System abgegebenen hydraulischen Leistung von der Regelpumpe 1 zurück, so daß die gesamte Leistungsaufnahme im wesentlichen dem gesamten Bedarf der Ölverbrauchsstellen entspricht, abzüglich einiger mechanischer Verluste, die in den Pumpen 1 und 2 auftreten mögen.

Von außen betrachtet, bleibt dabei die Leistungsaufnahme des Gesamtsystems konstant (siehe obere gestrichelte Linie), wobei die Konstantpumpe 2 für sich betrachtet zwar mehr Leistung aufnimmt, die überschüssige Leistungsaufnahme jedoch durch die als Motor laufende regelbare Pumpe kompensiert wird, da die Konstantpumpe mehr Öl fördert als das Gesamtsystem benötigt. Das Regelsystem 11 der Regelpumpe 1 und die Möglichkeit des Betreibens der Regelpumpe als Motor wirken insofern gleichzeitig als Druckbegrenzer für das Gesamtsystem.

Es versteht sich, daß dieses anhand der Figuren 2 und 3 erläuterte, grundsätzliche Zusammenwirken der beiden Pumpen und eine entsprechende Verteilung der Antriebsleistungen auch dann erhalten bleibt, wenn die Drehzahlen und Fördermengen beider Pumpen sich ändern, was gleichbedeutend damit ist, daß die Leistungsaufnahme der Konstantpumpe sich ebenfalls mit der Zeit ändert. Auch dabei kann es jedoch ohne weiteres geschehen, daß die Kurve der Gesamtleistungsaufnahme die Kurve der Leistungsaufnahme der Konstantpumpe schneidet, was entsprechend den vorstehend gegebenen Erläuterungen gleichbedeutend damit ist, daß ein Teil der Antriebsleistung für die Konstantpumpe aufgrund einer Überschußförderung derselben durch die regelbare Pumpe zurückgeliefert wird, durch welche der Überschuß zurück in eine Ölwanne abfließt.

## Patentansprüche

1. Ölversorgungssystem mit mindestens einer druck- und/oder volumenabhängig regelbaren Pumpe (1) und einer Ölwanne (5) oder dergleichen, aus welcher die Pumpe Öl ansaugt und mit geregeltem Ausgangsdruck oder Ausgangsvolumen an ein mit Öl zu versorgendes System (8) abgibt, **dadurch gekennzeichnet, daß** neben der geregelten Pumpe (1) eine Konstantpumpe (2) vorgesehen ist, wobei die regelbare Pumpe (1) so ausgestaltet ist, daß sie bei ein und derselben Drehrichtung ihrer Antriebswelle (10) wahlweise in der normalen Pumprichung oder in Gegenrichtung das Pumpmedium befördert, bzw. passieren läßt, und wobei der Ausgang (7) der Konstantpumpe (2) mit dem Ausgang (6) der regelbaren Pumpe (1) und dem mit Öl zu versorgenden System (8) verbunden ist.

2. Ölversorgungssystem nach Anspruch 1, **dadurch gekennzeichnet, daß** der Ausgang (7) der Konstantpumpe (2) über ein erstes Rückschlagventil (3) mit dem Ausgang (6) der regelbaren Pumpe (1) und dem mit Öl zu versorgenden System (8) verbunden ist.

3. Ölversorgungssystem nach Anspruch 2, **dadurch gekennzeichnet, daß** das erste Rückschlagventil (3) in Schließrichtung, das heißt gegen die Pumprichtung der Konstantpumpe (2), vorzugsweise durch eine Feder, vorgespannt ist.

4. Ölversorgungssystem nach Anspruch 2 oder 3, **dadurch gekennzeichnet, daß** die regelbare Pumpe (1) und die Konstantpumpe (2) eine gemeinsame Antriebswelle oder gekoppelte Antriebswellen aufweisen.

5. Ölversorgungssystem nach einem der Ansprüche 2 bis 4, **dadurch gekennzeichnet, daß** der Ausgang (7) der Konstantpumpe (2) über ein vor dem Rückschlagventil (3) abgehende Zweigleitung (12) mit der Ölwanne (5) oder dergleichen verbunden ist, wobei die Zweigleitung (12) ein wahlweise öffen- und schließbares Ventil enthält.

6. Ölversorgungssystem nach Anspruch 5 **dadurch gekennzeichnet, daß** das Ventil (4) der Zweigleitung (12) in Richtung der Konstantpumpe (2) schließt, jedoch in Öffnungsrichtung vorgespannt ist.

7. Ölversorgungssystem nach Anspruch 5 oder 6, **dadurch gekennzeichnet, daß** das Ventil (4) der Zweigleitung (12) ein massenstrom- oder schwimmergesteuertes Ventil ist.

8. Ölversorgungssystem nach einem der Ansprüche 1 bis 7, **dadurch gekennzeichnet, daß** die Konstantpumpe und die Regelpumpe ein im wesentlichen gleiches maximales Fördervolumen haben.

9. Ölversorgungssystem nach einem der Ansprüche 1 bis 8, **dadurch gekennzeichnet, daß** die regelbare Pumpe (1) und die Konstantpumpe (2) von einander beabstandete Saugstutzen haben.

10. Ölversorgungssystem nach Anspruch 9, **dadurch gekennzeichnet, daß** die Saugstutzen der beiden Pumpen (1, 2) in diametral gegenüberliegenden Bereichen der Ölwanne oder dergleichen münden.

11. Ölversorgungssystem nach einem der Ansprüche 1 bis 10, **dadurch gekennzeichnet, daß** die regelbare Pumpe eine regelbare Flügelzellenpumpe ist.

12. Ölversorgungssystem nach einem der Ansprüche 1 bis 10, **dadurch gekennzeichnet, daß** die Konstantpumpe eine Flügelzellenpumpe ist.

## Claims

1. An oil supply system comprising at least one pump (1) which is regulatable in dependence on pressure and/ volume, and an oil sump (5) or the like from which the pump sucks up oil and discharges it with a regulated output pressure or output volume to a system (8) to be supplied with oil, characterised in that beside the regulated pump (1) there is provided a constant pump (2). the regulatable pump (1) being so designed that it conveys or passes the pump medium selectively in the normal pump direction or in the opposite direction, with one and the same direction of rotation of its drive shaft (10). and wherein the output (7) of the constant pump (2) is communicated with the output (6) of the regulatable pump (1) and the system (8) to be supplied with oil.

2. An oil supply system according to claim 1 characterised in that the output (7) of the constant pump (2) is connected by way of a first check valve (3) to the output (6) of the regulatable valve (1) and the system (8) to be supplied with oil.

3. An oil supply system according to claim 2 characterised in that the first check valve (3) is biased in the closing direction, that is to say in opposite relationship to the pump direction of the constant pump (2), preferably by a spring.

4. An oil supply system according to claim 2 or claim 3 characterised in that the regulatable pump (1) and the constant pump (2) have a common drive shaft or coupled drive shafts.

5. An oil supply system according to one of claims 2 to 4 characterised in that the output (7) of the constant pump (2) is connected to the oil sump (5) or the like by way of a branch line (12) which branches off upstream of the check valve (3), the branch line (12) including a selectively openable and closable valve.

6. An oil supply system according to claim 5 characterised in that the valve (4) of the branch line (12) closes in the direction of the constant pump (2) but is biased in the opening direction.

7. An oil supply system according to claim 5 or claim 6 characterised in that the valve (4) of the branch line (12) is a mass flow- or float-controlled valve.

8. An oil supply system according to one of claims 1 to 7 characterised in that the constant pump and the regulated pump have a substantially equal maximum delivery volume.

9. An oil supply system according to one of claims 1 to 8 characterised in that the regulatable pump (1) and the constant pump (2) have mutually spaced intake connections.

10. An oil supply system according to claim 9 characterised in that the intake connections of the two pumps (1, 2) open in diametrally opposite regions of the oil sump or the like.

11. An oil supply system according to one of claims 1 to 10 characterised in that the regulatable pump is a regulatable vane pump.

12. An oil supply system according to one of claims 1 to 10 characterised in that the constant pump is a vane pump.

## Revendications

1. Système d'alimentation d'huile, comportant au moins une pompe (1) réglable en fonction de la pression et/ou du volume, et un carter d'huile (5) ou analogues, à partir duquel la pompe aspire de l'huile et, avec une pression de sortie ou un volume de sortie réglées, l'envoie à un système (8) qui doit être alimenté en huile, caractérisé en ce qu'on prévoit en plus de la pompe réglée (1) une pompe à débit constant (2), la pompe réglable (1) étant configurée de façon que, pour un seul et même sens de rotation de son arbre d'entraînement (10), elle puisse refouler ou faire passer le fluide pompé, au choix dans la direction du pompage ou dans la direction opposée, la sortie (7) de la pompe à débit constant (2) communiquant avec la sortie (6) de la pompe réglable (1) et avec le système (8) qui doit être alimenté en huile.

2. Système d'alimentation d'huile selon la revendication 1, caractérisé en ce que la sortie (7) de la pompe à débit constant (2) communique, par l'intermédiaire d'un premier clapet de retenue (3), avec la sortie (6) de la pompe réglable (1) et avec le système (8) qui doit être alimenté en huile.

3. Système d'alimentation d'huile selon la revendication 2, caractérisé en ce que le premier clapet de retenue est, en position fermée, c'est-à-dire contre la direction de pompage de la pompe à débit constant (2), soumis à une pré-tension, de préférence à l'aide d'un ressort.

4. Système d'alimentation d'huile selon la revendication 2 ou 3, caractérisé en ce que la pompe réglable (1) et la pompe à débit constant (2) comportent un arbre d'entraînement commun ou des arbres d'entraînement couplés.

5. Système d'alimentation d'huile selon l'une des revendications 2 à 4, caractérisé en ce que la sortie (7) de la pompe à débit constant (2) communique, par l'intermédiaire d'un branchement (12), qui part du clapet de retenue (3), avec le carter d'huile (5) ou analogues, le branchement (12) contenant une vanne pouvant au choix être ouverte ou fermée.

6. Système d'alimentation d'huile selon la revendication 5, caractérisé en ce que la vanne (4) du branchement (12) se ferme dans la direction de la pompe à débit constant (2), mais est pré-tendue dans la direction d'ouverture.

7. Système d'alimentation d'huile selon la revendication 5 ou 6, caractérisé en ce que la vanne (4) du branchement (12) est une vanne commandée par le débit massique ou par un flotteur.

8. Système d'alimentation d'huile selon l'une des revendications 1 à 7, caractérisé en ce que la pompe à débit constant et la pompe réglable ont des volumes de refoulement maximal essentiellement égaux.

9. Système d'alimentation d'huile selon l'une des revendications 1 à 8, caractérisé en ce que la pompe réglable (1) et la pompe à débit constant (2) possèdent des tubulures d'aspiration écartées l'une de l'autre.

10. Système d'alimentation d'huile selon la revendication 9, caractérisé en ce que les tubulures d'aspiration des deux pompes (1, 2) débouchent dans des zones diamétralement opposées du carter d'huile ou analogues.

11. Système d'alimentation d'huile selon l'une des revendications 1 à 10, caractérisé en ce que la pompe réglable est une pompe rotative à ailettes, réglable.

12. Système d'alimentation d'huile selon l'une des revendications 1 à 10, caractérisé en ce que la pompe à débit constant est une pompe rotative à ailettes.

# Fig.1

# Fig.2

# Fig.3

Konstantpumpe

Gesamtsystem

Leistung — Aufnahme

Regelpumpe/-motor

0

Zeit

Abgabe

(hydr. Leistung minus
mech. Verluste)